# EUROPEAN PATENT SPECIFICATION

(11) **EP 0 547 370 B1**
(45) Date of publication and mention of the grant of the patent: **07.08.1996**
(21) Application number: 92119255.5
(22) Date of filing: 11.11.1992
(51) Int. Cl.: A23L 3/3472, C09K 15/34, C11B 5/00

(54) **Preparation of antioxidants**
Antioxidantienherstellung
Préparation d'antioxydants

(30) Priority: 19.12.1991 US 810202
(43) Date of publication of application: 23.06.1993
(73) Proprietor: SOCIETE DES PRODUITS NESTLE S.A., CH-1800 Vevey (CH)
(72) Inventor: So, Rebecca Sui-Chun, New Milford, CO 06776 (US)
(74) Representative: Pate, Frederick George

(56) References cited:
- EP-A- 0 169 936
- EP-A- 0 267 630
- EP-A- 0 269 545
- EP-A- 0 384 547
- CHEMICAL ABSTRACTS, vol. 89, no. 19, 6 November 1978, Columbus, Ohio, US; abstract no. 161807w, MORI ET AL. 'Antioxidative activity in black tea' page 439 ;
- Kaseigaku Zasshi 1978, vol.29, no.3 (1978), pages 148-151 (full text)
- Derwent Ans: 90-049207, 90-294109, 90-019288, 89-244124, 89-170347, 89-147372

## Description

The present invention relates to a process for the preparation of antioxidants, more especially to water soluble antioxidants prepared from tea leaves.

There is a great demand for water soluble antioxidants in the food industry. One of the most desirable antioxidants is a tea antioxidant because it is extracted from tea leaves which is a natural product. However, not only are the applications of tea antioxidant limited owing to its strong tea colour and flavour but also the freeze dried extract cannot be completely redissolved in water.

It has been proposed to prepare natural antioxidants from tea leaves which comprises extracting tea leaves with hot water and then fractionating antioxidant components consisting mainly of catechins and esters thereof from the extracts in Chemical Abstracts, Vol 89, 161087w and by using systems containing organic solvents in JP 2003495. After drying, such extracts are not completely soluble in water and have a strong tea flavour and colour. EP-A-0384547 describes fractionating antioxidant components from the aerial parts of certain plants not including tea by eluting with water to obtain various coloured fractions.

We have found that we can obtain true water soluble tea antioxidants having a very light colour and only a weak tea flavour by fractionating an aqueous extract of tea leaves by liquid chromatography using water as the eluant. Antioxidant activities of above five times greater than those of the original tea extract may be obtained.

Accordingly, the present invention provides a process for preparing an antioxidant which comprises extracting tea leaves with water and then fractionating the extract by means of liquid chromatography using water as the eluant.

The tea leaves used may be green or black. The extraction method may be either a conventional cold or hot water extraction but is preferably a hot water extraction method where extraction takes place at a temperature of from 120° to 210°C, preferably from 165° to 185°C, for instance as described in United States Patents Nos 3451823, 4839187, 4891231 and 4925681.

The extract obtained is separated from the tea leaves and the liquid chromatography fractionation is then advantageously carried out, for example, by reverse phase, normal phase, size exclusion, gel filtration, anion-exchange, polarity or absorption mechanisms. The liquid chromatography may be either low pressure (LPLC) or high performance (HPLC). The fractionation may be carried out at a temperature of, for instance, from 15°C to 35°C and preferably at ambient temperature.

After fractionation, the eluate fractions are preferably concentrated to solids or liquid concentrates. If desired, two or more fractions may be combined before or after being concentrated to solids or liquid concentrates.

Food materials that may be stabilised against oxidation by the antioxidants of the present invention include frying oils and fats, potato flakes, bakery products, meat emulsions, precooked cereals, instant noodles, soy bean milk, chicken products, emulsion products such as sausage, mayonnaise and margarine, frozen fish, frozen pizza, cheese and animal foods.

The present invention also provides a composition comprising a food susceptible to lipid oxidation and an antioxidant; obtainable by a process according to the present invention.

The following Examples further illustrate the present invention.

### Examples 1 to 7

Black tea leaves were mixed with water (1:19) and extracted at 175°C at a pressure of 344·75 x 10³ Pascals (50 psi) for 75 minutes. The mixture was filtered at 71°C and the filtered extract was recovered and fractionated at ambient temperature by the following different mechanisms:

### Example

### Gel Filtration

1. Sephadex G25M, 2.3g, 5cm, 9.1cm³; 3 g of sample eluted with 5 x 5ml of water.
2. Sephadex LH-20, 2.2g, 5.6cm, 10.2cm³; 6 g of sample eluted with 6 x 8 ml of water.
3. TSK-Gel (Toyopearl Hw-40F, 30-60 um) 9.5g (wet base), 5.1cm, 9.2cm³; 10g of sample eluted with 4 x 10ml of water, and washed with 10ml of 20% methanol and 2 x 10ml of 70% methanol to regenerate the column.

### Anion-Exchange: Dow Resin 1 x 8 - 400

4. Cl⁻ Form: 3g, 2.1cm, 3.8cm³, 20g of sample eluted with 3 x 20ml of water and washed with 4 x 10ml of 5% Hydrochloric acid to regenerate the column.

### Polarity

5. C₁₈ (Octadecylsilane bound to silica gel, 40 um APD 60A°) 500mg, 0,6cm, 1.0cm³, 3 g of sample eluted with 5ml of water, and washed with 5ml of 20% methanol and 5ml of 70% methanol to regenerate the column.

### Absorption

6. PVP (Polyvinylpyrrolidone, crosslinked) 1g, 3.6cm, 6.6cm³ 20 g of sample eluted with 7 x 20 ml of water.

All eluate fractions were concentrated overnight at room temperature by means of a Speed Vac at 53·32 Pascals (0.4 torr) and their antioxidant activity in chicken fat at a content of 0.05% by weight based on the weight of chicken fat were measured by a modified Rancimat. Method which is an accelerated oxidation test described by J.Frank, J.Geil and R.Freaso in "Food Technology 1982, Vol. 36, No. 6, p. 71", in chicken fat at 100°C. The oxidative stability of the chicken fat was determined by the induction period (IP), the time required for the fat to become rancid. To facilitate comparison of the data, the antioxidant index (AI), defined as the induction period of the treatment divided by the induction period of the control was used to report the effectiveness of the antioxidants. In the test, frozen chicken fat was melted directly over low heat on a stove top. The test antioxidants were incorporated directly into 100g samples of the melted fat and homogenised. Ten gram samples of the control chicken fat, and chicken fat containing the antioxidant were then placed in the Rancimat reaction vessels for the accelerated oxidation test. The test temperature was 109°C instead of 100°C which is prescribed by the Rancimat Method noted above.

This was the only modification made to the Rancimat procedure. The air flow rate was 20 litre/hr. The recovery of tea solids and the antioxidant activity of different fractions are summarised in Table I in which AI is the Antioxidant Index and the AI Ratio is the antioxidant activity of a fraction of the present invention compared with the original tea extract.

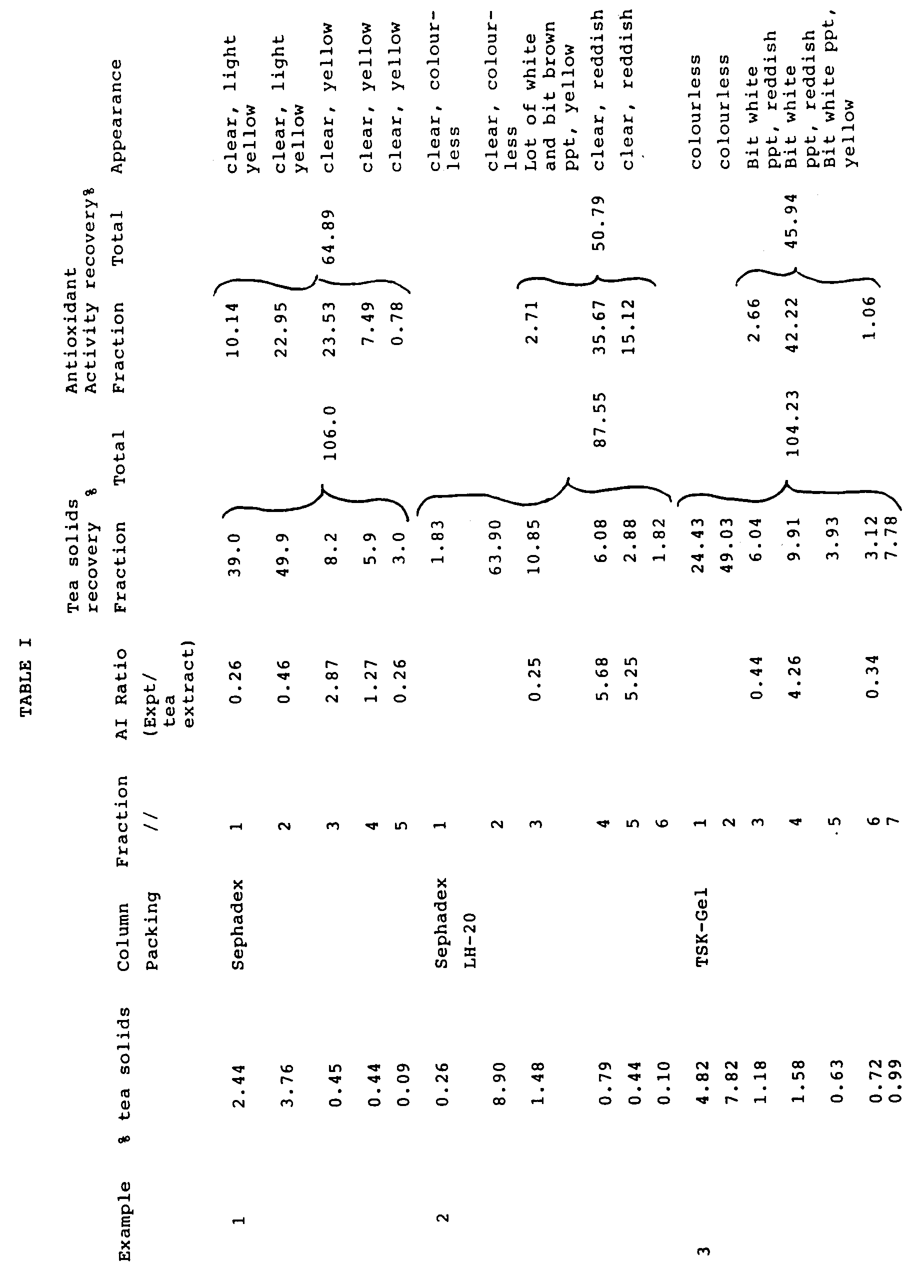

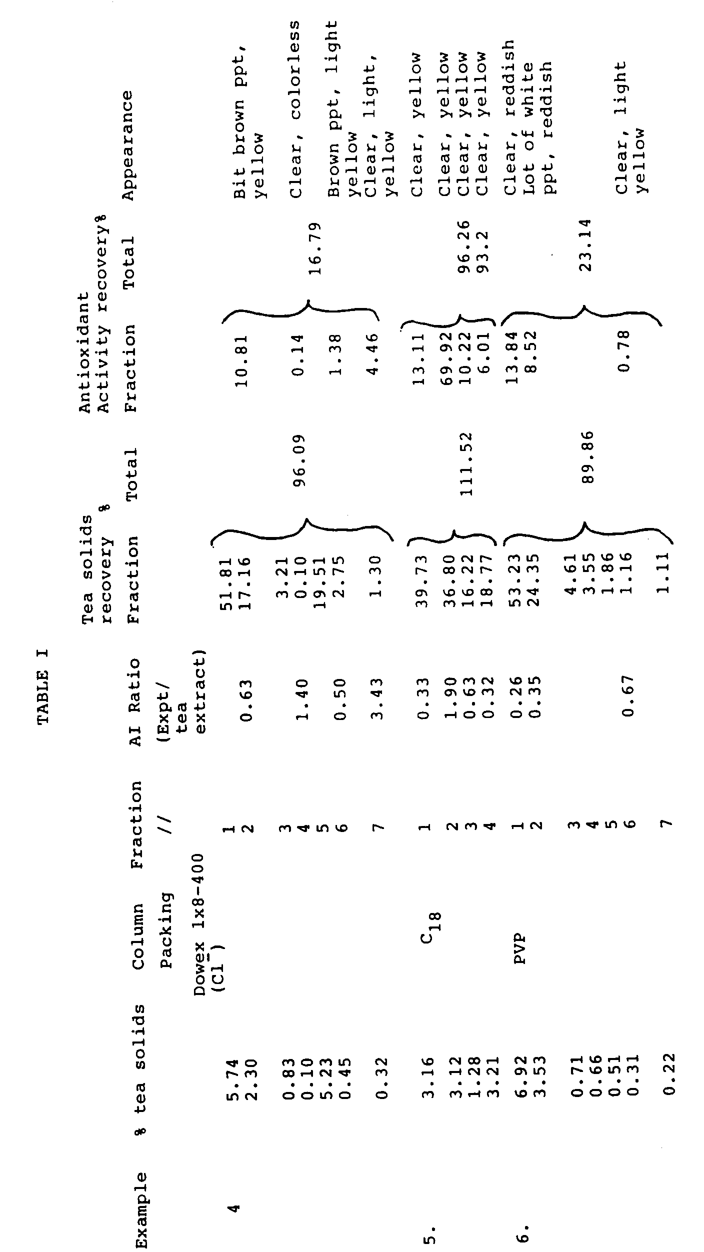

From the results shown in Table I it can be seen that Fractions 4 and 5 from Sephadex LH-20 (Example 2) and Fraction 4 from TSK-HW4OF (Example 3) have high antioxidant activities between 4 and 5.68 times that of the original tea extract. The data indicates that antioxidants with various activities can be prepared by combining various fractions. The total activity recovery of these fractions from gel filtration was about 50%.

All the fractions were practically clear with a faint tea odour whereas conventional tea extract containing about 2% tea solids has poor solubility and a strong odour with a burnt note.

Although polarity separation by C₁₈ column cannot produce a high activity fraction, its total activity recovery was over 90% and the column can be readily regenerated with alcohol. Therefore, the extraction process can be carried out by preparative high performance liquid chromatography.

Chromatographic analytical data indicate that pyrogallol is the main constituent of the fractions with high antioxidant activity.

It can thus be seen that desirable true water soluble tea antioxidants may be obtained in the present invention by means of liquid chromatography using water alone as the eluant.

## Claims

1. A process for preparing an antioxidant which comprises extracting tea leaves with water and then fractionating the extract by means of liquid chromatography using water as the eluant

2. A process according to claim 1 wherein the tea leaves are green or black.

3. A process according to claim 1 wherein the extraction is carried out at a temperature of from 120°C to 210°C.

4. A process according to claim 1 wherein the liquid chromatography fractionation is carried out by gel filtration, anion-exchange, polarity or absorption mechanisms.

5. A process according to claim 1 wherein, after factionation, the eluate fractions are concentrated to solids or liquid concentrates.

6. A process according to claim 1 wherein two or more fractions are combined before or after being concentrated to solids or liquid concentrates.

7. A composition comprising a food susceptible to lipid oxidation and an antioxidant obtainable by a process as claimed in claim 1 the main constituent of the said antioxidant being pyrogallol.

## Patentansprüche

1. Verfahren zur Herstellung eines Antioxidationsmittels, welches ein Extrahieren von Teeblättern mit Wasser und anschließend ein Fraktionieren des Extraktes mittels Flüssigkeitschromatographie unter Anwendung von Wasser als Elutionsmittel umfaßt.

2. Verfahren nach Anspruch 1, worin die Teeblätter grün oder schwarz sind.

3. Verfahren nach Anspruch 1, worin die Extraktion bei einer Temperatur von 120°C bis 210°C vorgenommen wird.

4. Verfahren nach Anspruch 1, worin die flüssigkeitschromatographische Fraktionierung durch Gelfiltrations-, Anionenaustausch-, Polaritäts- oder Absorptionsmechanismen vorgenommen wird.

5. Verfahren nach Anspruch 1, worin nach der Fraktionierung die Eluatfraktionen zu festen oder flüssigen Konzentraten eingeengt werden.

6. Verfahren nach Anspruch 1, worin zwei oder mehrere Fraktionen vor oder nach dem Einengen zu festen oder flüssigen Konzentraten vereinigt werden.

7. Zusammensetzung, umfassend ein einer Lipidoxidation unterliegendes Nahrungsmittel und ein Antioxidationsmittel, das nach einem Verfahren gemäß Anspruch 1 erhältlich ist, wobei der Hauptbestandteil dieses Antioxidationsmittels Pyrogallol ist.

## Revendications

1. Procédé de préparation d'un antioxydant, qui comprend les étapes consistant à soumettre des feuilles de thé à une extraction avec de l'eau et ensuite à fractionner l'extrait par chromatographie en phase liquide en utilisant de l'eau comme éluant.

2. Procédé suivant la revendication 1, dans lequel les feuilles de thé sont vertes ou noires.

3. Procédé suivant la revendication 1, dans lequel l'extraction est effectuée à une température de 120°C à 210°C.

4. Procédé suivant la revendication 1, dans lequel le fractionnement par chromatographie en phase liquide est effectué par des mécanismes de filtration sur gel, d'échange d'anions, de polarité ou d'absorption.

5. Procédé suivant la revendication 1, dans lequel, après fractionnement, les fractions d'éluat sont concentrées en matières solides ou concentrés liquides.

6. Procédé suivant la revendication 1, dans lequel deux ou plus de deux fractions sont réunies avant ou après concentration sous forme de matières solides ou de concentrés liquides.

7. Composition comprenant un aliment sensible à l'oxydation des lipides et un antioxydant pouvant être obtenus par un procédé suivant la revendication 1, le constituant principal de cet antioxydant étant le pyrogallol.
